# FASCICULE DE BREVET EUROPEEN

(11) **EP 3 010 099 B1**
(45) Date de publication et mention de la délivrance du brevet: **10.05.2017**
(21) Numéro de dépôt: 15187780.0
(22) Date de dépôt: 30.09.2015
(51) Int. Cl.: H02B 1/056

(54) **PANNEAU DE DISJONCTEURS**
LEISTUNGSSCHALTERPLATTE
CIRCUIT-BREAKER PANEL

(30) Priorité: 13.10.2014 FR 1459795
(43) Date de publication de la demande: 20.04.2016
(73) Titulaire: Crouzet Automatismes, 26000 Valence (FR)
(72) Inventeur: MEUX, Dominique, 26000 VALENCE (FR); VILLE, Fabien, 07130 SAINT-PERAY (FR); VERGNES, Jean-Marie, 26320 SAINT MARCEL LES VALENCE (FR)
(74) Mandataire: GIE Innovation Competence Group

(56) Documents cités:
- EP-A1- 2 254 207

## Description

L'invention concerne un panneau de disjoncteurs ainsi qu'un disjoncteur et un joint pour ce disjoncteur.

Des panneaux connus de disjoncteurs comportent :
- un capot avant amovible comportant des ouvertures,
- plusieurs disjoncteurs, chaque disjoncteur comportant, d'un côté, un culot, et du côté opposé, une tête reçue à l'intérieur d'une ouverture respective du capot avant, cette tête comprenant :
   - une partie tronconique qui s'évase, en allant vers le culot, depuis un sommet jusqu'à sa base, et
   - un épaulement perpendiculaire à une direction d'embrochage situé au niveau de la base de la partie tronconique,
- la partie tronconique comportant immédiatement successivement en allant de sa base jusqu'à son sommet :
   - un joint tronconique en matériau élastomère, ce joint tronconique présentant une première face tronconique, directement exposée à l'extérieur, s'étendant depuis un bord inférieur jusqu'à un bord supérieur, et
   - un tronc de cône en matériau plus dur que le matériau du joint tronconique, ce tronc de cône présentant une seconde face tronconique, directement exposée à l'extérieur, s'étendant depuis un bord inférieur jusqu'à un bord supérieur contenu dans le sommet de la partie tronconique.

Un tel panneau de disjoncteurs est divulgué dans la demande EP2254207A1. Dans un tel panneau, le joint permet d'empêcher que des chocs répétés entre la tête du disjoncteur et le bord de l'ouverture finissent pas provoquer une commutation intempestive du disjoncteur.

Lors du remplacement d'un disjoncteur défectueux, il faut généralement non seulement remplacer le disjoncteur mais aussi son joint. Or, si le joint est solidaire de l'ouverture et non pas du disjoncteur, comme décrit dans le mode de réalisation de la figure 4 de la demande EP2254207A1, alors il arrive fréquemment que l'on oublie de changer le joint ou que ce joint soit perdu.

Le mode de réalisation de la figure 6 de la demande EP2254207A1 évite cet inconvénient puisque le joint est solidaire de la tête du disjoncteur. Cela permet de remplacer en une seule opération à la fois le disjoncteur et le joint. Par contre, avec le mode de réalisation de la figure 6 de la demande EP2254207A1, le montage du capot avant sur les têtes des disjoncteurs est difficile. En effet, les rebords des ouvertures du capot avant sont généralement en métal. Lors du montage, ces rebords viennent directement frotter sur le joint tronconique en matériau élastomère. Étant donné la différence de dureté entre le rebord métallique et le joint, le capot avant glisse difficilement sur la partie tronconique des disjoncteurs. Ceci rend le centrage des têtes des disjoncteurs au milieu des ouvertures très difficile à réaliser notamment lorsque le nombre de disjoncteurs est élevé. Ici, on considère que le nombre de disjoncteurs est élevé lorsqu'il dépasse dix ou cinquante disjoncteurs. De plus, le frottement du métal sur l'élastomère use rapidement les joints tronconiques.

L'invention vise à proposer un panneau de disjoncteurs présentant les avantages du mode de réalisation de la figure 6 de la demande EP2254207A1 tout en permettant un montage plus facile du capot avant même lorsque le nombre de disjoncteurs est élevé.

Elle a donc pour objet un panneau de disjoncteurs conforme à la revendication 1.

Dans le mode de réalisation ci-dessus, plus des deux tiers de la partie tronconique est formée par le tronc de cône en matériau plus dur que le matériau du joint. Ainsi, lors du montage du capot avant, le centrage des ouvertures sur les têtes des disjoncteurs se fait essentiellement par frottement entre les troncs de cône en matériau plus dur et le rebord des ouvertures. Puisque le tronc de cône est en matériau plus dur que le matériau des joints, ce centrage est facilité. En effet, lors du centrage, le capot avant glisse facilement sur les faces tronconiques des troncs de cône des disjoncteurs. De plus, cela limite aussi l'usure des faces tronconiques des joints.

À l'issue de ce centrage initial, les ouvertures du capot avant sont déjà quasiment parfaitement centrées par rapport aux têtes des disjoncteurs. Il ne reste donc plus qu'à immobiliser les têtes des disjoncteurs à l'intérieur des ouvertures. Pour cela, l'utilisateur pousse le capot avant pour le plaquer contre les épaulements des disjoncteurs. C'est seulement à ce moment-là que les rebords des ouvertures entrent en contact avec les faces tronconiques des joints des disjoncteurs. Ce contact du rebord de l'ouverture sur le joint est transformé, par la face tronconique, en une force de maintien et, simultanément, en une force radiale perpendiculaire. La force de maintien est parallèle à la direction d'embrochage et immobilise le disjoncteur dans sa position embrochée. La force radiale immobilise la tête du disjoncteur au centre de l'ouverture. Ainsi, la face tronconique du joint sert presque uniquement à immobiliser le disjoncteur à l'intérieur de l'ouverture. De plus, puisque le joint est dans un matériau moins dure, cette fonction d'immobilisation est remplie même si le rebord de l'ouverture ne glisse pas sur la face tronconique du joint mais se contente seulement de la déformer. Ainsi, en plaçant le joint uniquement au niveau de la base de la partie tronconique, on conserve les avantages du mode de réalisation de la figure 6 de la demande EP2254207A1 tout en facilitant la mise en place du capot avant. De plus, le panneau ci-dessus conserve la capacité des joints à immobiliser les têtes des disjoncteurs au centre des ouvertures.

Les modes de réalisation de ce panneau peuvent comporter une ou plusieurs des caractéristiques des revendications dépendantes.

Ces modes de réalisation du panneau de disjoncteurs présentent en outre les avantages suivants :
- La présence d'une rondelle coincée entre le capot avant et l'épaulement permet d'améliorer l'immobilisation du disjoncteur dans la direction d'embrochage.
- Le fait que la distance entre les bords inférieur et supérieur du joint soit supérieure à l'écart entre Max(H_{Ei}) - Min(HEi) garantit d'immobiliser, dans la direction d'embrochage, chaque disjoncteur du panneau même s'il existe de légères différences de hauteurs entre ces disjoncteurs. Autrement dit, le joint permet alors en plus de rattraper les différences de hauteur entre différents disjoncteurs du panneau.

L'invention a également pour objet un disjoncteur pour le panneau de disjoncteurs ci-dessus.

Les modes de réalisation de ce disjoncteur peuvent comporter une ou plusieurs des caractéristiques des revendications dépendantes.

Ces modes de réalisation du disjoncteur présentent en outre les avantages suivants :
- La présence d'un bourrelet, en saillie sur une face interne du joint, reçu dans un renfoncement ménagé dans le disjoncteur, permet de maintenir en place le joint sans avoir à utiliser une colle.

Enfin, l'invention a également pour objet un joint, pour le disjoncteur ci-dessus.

L'invention sera mieux comprise à la lecture de la description qui va suivre, donnée uniquement à titre d'exemple non limitatif et faite en se référant aux dessins sur lesquels :
- la figure 1 est une illustration schématique en perspective d'un panneau de disjoncteurs ;
- la figure 2 est une illustration schématique en vue de face d'un disjoncteur pour le panneau de la figure 1 ;
- la figure 3 est une illustration schématique en vue de côté du panneau de la figure 1 ;
- la figure 4 est une illustration schématique et en coupe verticale d'un tronc de cône du disjoncteur de la figure 2 ;
- la figure 5 est une illustration schématique partielle, en coupe verticale, d'un joint du disjoncteur de la figure 2 ;
- la figure 6 est une illustration schématique et en perspective du joint du disjoncteur de la figure 2 ;
- la figure 7 est une illustration schématique et en coupe verticale du joint de la figure 6 ;
- la figure 8 est une illustration schématique partielle, en coupe verticale, d'une tête du disjoncteur de la figure 2.

Dans ces figures, les mêmes références sont utilisées pour désigner les mêmes éléments. Dans la suite de cette description, les caractéristiques et fonctions bien connues de l'homme du métier ne sont pas décrites en détail.

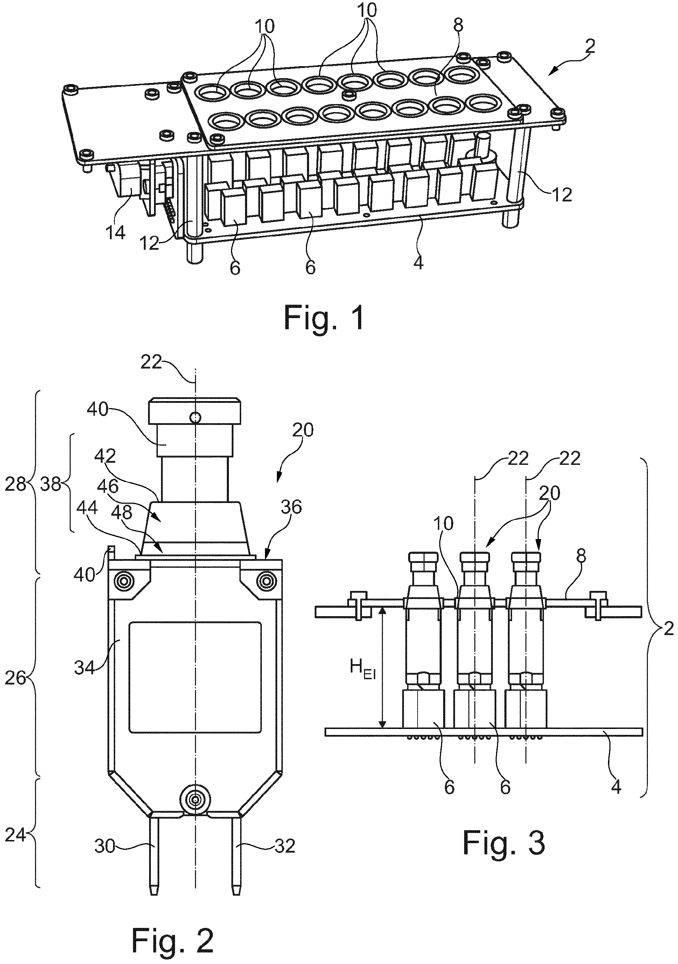

La figure 1 représente un panneau 2 de disjoncteurs. Le panneau 2 est typiquement destiné à être installé dans un environnement qui vibre, comme l'intérieur d'un avion. Ce panneau 2 a pour fonction de regrouper dans un même tableau électrique différents disjoncteurs de différents équipements électriques. Son architecture est conçue pour qu'il soit robuste vis-à-vis, notamment, des vibrations.

Pour simplifier la figure 1, les disjoncteurs du panneau 2 n'ont pas été représentés. Ce panneau 2 comporte :
- une plaque 4 arrière horizontale de connexion sensiblement rectangulaire,
- des prises 6 débrochables fixées sans aucun degré de liberté sur la face supérieure de la plaque 4,
- un capot avant 8 dans lequel sont ménagées des ouvertures 10 pour recevoir des têtes de disjoncteurs,
- des entretoises 12 situées au quatre angles de la plaque 4 pour fixer sans aucun degré de liberté le capot 8 sur cette plaque 4, et
- un connecteur 14 de puissance pour relier le panneau 2 aux différents équipements électriques à disjoncter.

Par la suite, les termes « supérieur », « inférieur », « haut », « bas » et similaires sont définis par rapport à la direction verticale, c'est-à-dire par rapport à la direction perpendiculaire au plan dans lequel s'étend principalement la plaque 4.

La plaque 4 est typiquement une plaque d'un circuit imprimé. Elle comporte donc des pistes électriques gravées qui raccordent chaque prise 6 au connecteur 14.

Chaque prise 6 est destinée à recevoir la ou les broches d'un disjoncteur respectif.

Le capot 8 est déplaçable entre une position montée (représenté sur les figures 1 et 3) et une position démontée. Dans la position montée, le capot 8 est fixé sans aucun degré de liberté sur l'extrémité supérieure des entretoises 12. L'extrémité inférieure de ces entretoises 12 est fixée sans aucun degré de liberté sur la plaque 4. Dans cette position, le capot 8 retient les disjoncteurs enfichés à l'intérieur des prises 6 en exerçant sur chacun de ces disjoncteurs une force verticale dirigée vers la plaque 4. Le capot 8 est fixé sur les extrémités supérieures des entretoises 12 au moyen d'un mécanisme de fixation démontable, comme des boulons et des écrous. Quand le mécanisme de fixation est démonté, le capot 8 est alors dans sa position démontée. Dans cette position démontée, les disjoncteurs peuvent être librement débrochés et retirés de la plaque 4 et, en alternance, embrochés sur les prises libres 6 de la plaque 4. Cela permet notamment de remplacer un disjoncteur défectueux. Le capot 8 est réalisé dans un matériau dur et, typiquement, en métal. Par « matériau dur », on désigne ici un matériau dont le module de Young à 25°C est supérieur à 1 GPa et, de préférence, supérieur à 10 GPa ou 100 GPa.

La figure 2 représente un disjoncteur 20 destiné à être embroché dans les prises 6 du panneau 2. Ce disjoncteur 20 s'étend essentiellement le long d'un axe vertical 22 parallèle à la direction d'embrochage du disjoncteur 20 dans les prises 6.

En partant du bas vers le haut, le long de l'axe 22, le disjoncteur 20 présente successivement un culot 24, un corps 26 et une tête 28.

Le culot 24 est apte à raccorder électriquement le disjoncteur 20 aux prises 6. A cet effet, ici, le culot 24 comporte deux broches 30 et 32 aptes chacune à s'enficher dans une prise 6 respective de la plaque 4. À cet effet, le disjoncteur 20 est déplaçable, le long de la direction d'embrochage entre une position embrochée (représentée sur la figure 3) et une position débrochée (représentée sur la figure 2). Dans la position embrochée, les broches 30 et 32 sont insérées à l'intérieur de prises 6 respectives de manière à raccorder électriquement le disjoncteur 20 au connecteur 14 par l'intermédiaire de ces prises 6. Dans la position débrochée, les broches 30 et 32 sont mécaniquement indépendantes des prises 6, ce qui permet d'isoler électriquement le disjoncteur 20 du connecteur 14.

Le corps 26 comprend un boîtier 34 en matériau électriquement isolant et dur, à l'intérieur duquel sont logées les principales pièces du disjoncteur 20 pour assurer la commutation de courant. Par la suite, par « matériau électriquement isolant », on désigne ici un matériau dont la résistivité à 20° est supérieure à 10³ Ω.m et de préférence supérieure à 10⁶ Ω.m ou 10¹⁰ Ω.m.

La tête 28 comprend successivement en partant du bas vers le haut, le long de l'axe 22 : un épaulement horizontal 36, une partie tronconique 38 et un bouton d'actionnement 40.

L'épaulement 36 s'étend tout autour de l'axe 22. Il présente une face d'appui supérieure horizontale tournée vers le haut. Par exemple, la surface de cette face d'appui est supérieure à 2 mm² ou 5 mm² ou 1 cm². Cet épaulement est destiné à venir en appui sur le capot avant 8 lorsque ce capot est dans sa position montée pour retenir le culot 24 embroché dans les prises 6. Ici, l'épaulement 36 comporte aussi un détrompeur 40. Le détrompeur 40 est par exemple un picot vertical apte à être reçu à l'intérieur d'un trou correspondant dans le capot 8 uniquement lorsque le disjoncteur 20 est correctement positionné dans les prises 6.

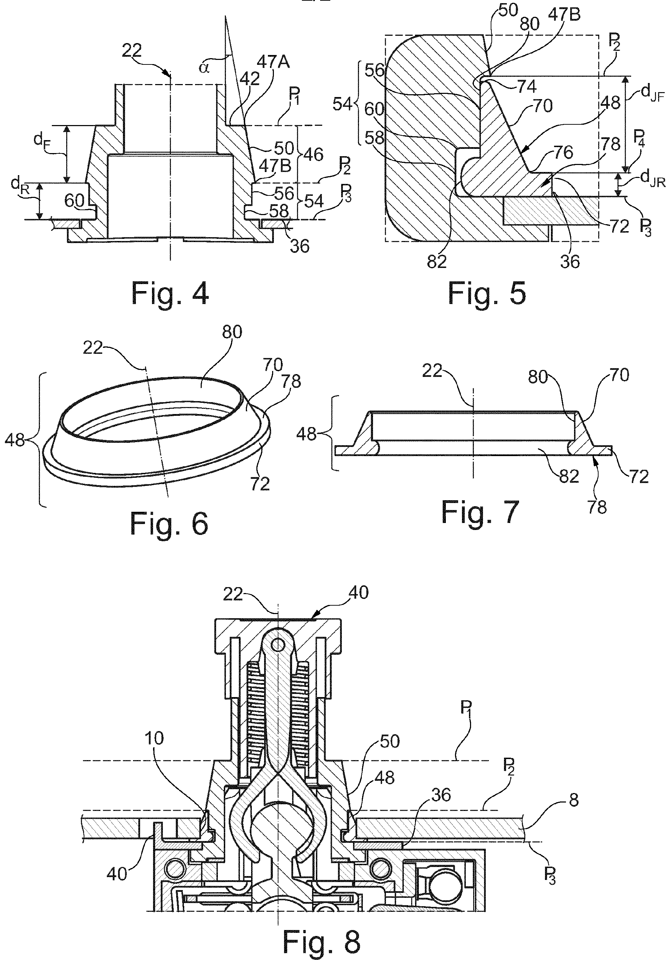

La partie tronconique 38 est destinée, en outre, à centrer la tête 28 à l'intérieur d'une ouverture 10 lorsque le capot 8 passe de sa position démontée vers sa position montée. Cette partie tronconique 38 s'étend entre un sommet horizontal 42 et une base horizontale 44. Elle comprend successivement en allant du haut vers le bas, un tronc de cône 46 puis un joint tronconique 48. Le sommet 42 et la base 44 sont ici circulaires. Le diamètre du sommet est inférieur d'au moins 1 mm ou 2 mm au diamètre K de l'ouverture 10. Le diamètre de la base 44 est pratiquement égal au diamètre K. Par exemple, le diamètre de la base 44 est strictement inférieur au diamètre K et, typiquement, supérieur à 0,9K ou 0,95K. La partie tronconique 38 est décrite plus en détail en référence aux figures 4 à 8 qui suivent.

Le bouton 40 est situé sur le sommet 42 de la partie tronconique 38. Il est déplaçable le long de l'axe 22, directement à la main par un utilisateur, entre une position saillante et une position enfoncée. Lorsque le bouton 40 est dans sa position saillante, le disjoncteur est dans un état ouvert. Dans l'état ouvert, les broches 30 et 32 sont électriquement isolées l'une de l'autre. A l'inverse, dans la position enfoncée, les broches 30 et 32 sont électriquement raccordées l'une à l'autre pour permettre le passage du courant entre ces deux broches et donc l'alimentation d'un équipement électrique correspondant. Ici, déplacer manuellement le bouton 40 entre ces positions saillante et enfoncée permet de faire commuter manuellement ce disjoncteur entre ces états ouvert et fermé. Le disjoncteur 20 est aussi apte à commuter automatiquement de son état fermé vers son état ouvert si l'intensité du courant traversant les broches 30 ou 32 dépasse un seuil prédéterminé. Après cette commutation automatique du disjoncteur 20 vers son état ouvert, le disjoncteur 20 peut être réarmé en déplaçant manuellement le bouton 40 vers sa position enfoncée.

La figure 3 représente le capot 8 dans sa position montée. Comme visible sur cette figure, dans cette position montée, les têtes 28 des disjoncteurs traversent chacune une ouverture 10 respective. Ici, on considère que les différents disjoncteurs du panneau 2 sont tous identiques. Typiquement, le panneau 2 comporte au moins un et, de préférence, plus de cinq ou dix ou trente ou cinquante disjoncteurs.

La figure 4 représente plus en détail la portion tronconique 38 avec le tronc de cône 46 mais dépourvu du joint 48. Le tronc 46 est réalisé dans un matériau au moins deux ou trois fois plus dur que le matériau utilisé pour réaliser le joint 48. Ici, il s'agit d'un matériau dur tel qu'un plastique dur ou un métal.

Le tronc 46 présente une face tronconique 50 directement exposée à l'extérieur. Cette face 50 s'étend continûment en s'évasant depuis un bord supérieur 47A, situé dans un plan horizontal P₁, jusqu'à un bord inférieur 47B situé dans un plan horizontal P₂. Le plan P₂ est situé en dessous du plan P₁. Le sommet 42 de la portion tronconique 38 est contenu dans le plan P₁. La distance verticale entre les plans P₁ et P₂ est notée d_{F}. Ici, la distance d_{F} est supérieure ou égale à 5 mm ou 7 mm et, généralement, inférieure ou égale à 20 mm ou 15 mm.

La face 50 est un tronc de cône de révolution présentant une infinité de symétrie de rotation autour de l'axe 22. Cette face 50 fait un angle α avec la verticale. Cet angle α est compris entre 5° et 45° et, de préférence, entre 10 et 30°.

Immédiatement en dessous du tronc 46, la partie tronconique 38 présente une rainure annulaire 54 qui s'étend du plan P₂ jusqu'à un plan horizontal P₃. Le plan P₃ contient l'épaulement 36. La distance verticale entre les plans P₂ et P₃ est noté d_{R}.

La rainure 54 est destinée à recevoir le joint 48. Elle présente une infinité de symétrie de rotation autour de l'axe 22. Son profil, dans un plan vertical contenant l'axe 22, présente, immédiatement et successivement en allant du haut vers le bas, un premier fond plat 56 suivi d'un second fond plat 58. Les fonds 56 et 58 sont des cylindres de révolution centrés sur l'axe 22. Le fond 56 se trouve à une distance de l'axe 22 supérieure à la distance à laquelle se trouve le fond 58. Ainsi, le fond 58 constitue le fond d'un renfoncement 60.

Les figures 5 à 7 représentent plus en détail le joint 48. Plus précisément, la figure 5 représente le joint 48 monté à l'intérieur de la rainure 54 et les figures 6 et 7 représentent ce joint 48 situé en dehors de la rainure 54. Le joint 48 est entièrement réalisé dans un matériau souple élastiquement déformable sous l'effet de la pression du capot 8 lorsque celui-ci est déplacé vers sa position montée. Typiquement, le joint 48 est réalisé dans un matériau dont le module de Young est inférieur à 0,1GPa à 25°C. Il s'agit typiquement d'un polymère et, généralement, d'un élastomère.

Le joint 48 comporte une face externe directement exposée à l'extérieur lorsque le joint 48 est reçu à l'intérieur de la rainure 54. Cette face externe comprend une face tronconique 70 suivie, en allant du haut vers le bas, par une face cylindrique circulaire 72.

La face tronconique 70 s'étend, en s'évasant depuis un bord supérieur 74 jusqu'à un bord inférieur 76 situé dans un plan horizontal P₄. Le plan P₄ contient la base 44 de la portion tronconique 38. La distance verticale entre les plans P₂ et P₄ est notée d_{JF}. La distance d_{JF} est au moins deux ou trois fois inférieure à la distance d_{F}. La distance d_{JF} est typiquement inférieure à 3 mm . Cette distance d_{JF} est aussi supérieure à l'épaisseur du capot avant 8 et donc généralement supérieure à 0,5 mm. Ici, cette distance d_{JF} est supérieure à l'écart entre max(H_{Ei})-min(H_{Ei}), où :
- H_{Ei} est la hauteur du disjoncteur entre son épaulement 36 et la face supérieure de la plaque 4 quand il est dans sa position embrochée et l'indice i est un identifiant de ce disjoncteur permettant de l'identifier parmi l'ensemble des autres disjoncteurs du panneau 2,
- Max(...) est la fonction qui retourne la plus grande des hauteurs H_{Ei} parmi l'ensemble des hauteurs H_{Ei} des disjoncteurs du panneau 2, et
- Min(...) est la fonction qui retourne la plus petite hauteur H_{Ei} parmi l'ensemble des hauteurs H_{Ei} des disjoncteurs du panneau 2.

La distance H_{Ei} est représentée sur la figure 3 dans le cas particulier où celle-ci est la même pour les trois disjoncteurs visibles sur cette figure.

Le bord supérieur 74 est tourné vers le plan P₂. Ce bord 74 est situé à moins de 0,5 mm et de préférence à moins de 0,2 mm de ce plan P₂. Dans un plan vertical, la face tronconique 70 est inclinée par rapport à la direction verticale d'un angle β. L'ange β est typiquement égal à l'angle α à plus ou moins 10° ou 5° près.

La face cylindrique 72 est plus éloignée de l'axe 22 que le bord inférieur 76. Dans ces conditions, cette face 72 correspond à la face verticale d'une rondelle 78 qui s'étend uniquement entre les plans P₃ et P₄. La face inférieure de la rondelle 78 repose directement sur l'épaulement 36. Ainsi, la rondelle 78 se trouve coincée entre le capot 8 et l'épaulement 36 quand ce capot 8 est dans sa position montée. Cela facilite le rattrapage des écarts entre les différentes hauteurs H_{Ei} des différents disjoncteurs 20 du panneau 2. On peut ainsi garantir que, dans la position montée, le capot 8 exerce bien une force verticale de maintien qui immobilise le disjoncteur 20 dans la direction verticale.

La distance verticale entre les plans P₃ et P₄ est ici notée d_{JR}. Cette distance d_{JR} est supérieure ou égale, par exemple, à 0,5 mm et généralement inférieure ou égale à 2 mm ou 1,5 mm.

Le joint 48 présente une face interne tournée vers l'intérieur de la rainure 54. Cette face interne comporte successivement en allant du haut vers le bas une face verticale 80 puis, immédiatement après, une face 82 en forme de demi-torre.

La face 80 est un cylindre de révolution centrée sur l'axe 22. Cette face est directement en appui sur le fond 56 de la rainure 54. La distance entre l'axe 22 et le fond 56 est ajustée pour que le bord supérieur 74 du joint 48 soit légèrement en retrait, vers l'intérieur du disjoncteur 20, par rapport au bord inférieur 47B du tronc 46. Par exemple, le bord 74 est en retrait du bord 47B d'au moins 0,05 mm ou 0,1 mm dans une direction horizontale. Généralement, ce retrait est inférieur à 1 mm. Dans ces conditions, lors du montage du capot 8, celui-ci ne peut pas venir en butée sur le bord supérieur 74. En effet, ce bord 74 est escamoté à l'intérieur de la rainure 54 et ne crée donc aucune aspérité sur la partie tronconique 38. On facilite ainsi le montage du capot 8 et on limite aussi l'usure du joint 48.

La face 82 forme un bourrelet qui fait saillie uniquement à l'intérieur du renfoncement 60. Cela permet de retenir le joint 48 en place sur le disjoncteur 20 sans utiliser de colle. De plus, le volume du renfoncement 60 est supérieur à celui du bourrelet de manière à aménager des espaces vides. Ces espaces vides se remplissent du matériau du joint 48 lorsque celui-ci flue sous l'effet de la pression exercée par le capot 8 lors du montage. Ces espaces vides permettent donc de limiter les déformations, notamment, de la face tronconique 70.

La figure 8 représente la portion tronconique 38 dans le cas où le capot 8 est dans sa position montée. Dans cette position, le rebord de l'ouverture 10 du capot 8 enfonce verticalement la face tronconique 70 du joint 48. De plus, le capot 8 vient écraser verticalement la rondelle 78.

Lors du déplacement du capot 8 vers sa position montée, le rebord de l'ouverture 10 glisse d'abord sur la face tronconique 50 en matériau dur du tronc 46. Cela permet de centrer, sans effort et sans user le joint 48, la tête 38 à l'intérieur de l'ouverture 10. Une fois ce centrage terminé, le rebord de l'ouverture 10 entre en contact avec la face tronconique 70 du joint 48. Étant donné que cette face 70 est oblique, la déformation de cette face 70 par le capot 8 crée une force verticale qui immobilise le disjoncteur 20 dans sa position embrochée et, simultanément, une force radiale horizontale qui immobilise la tête 28 au centre de l'ouverture 10. De plus, étant donné que le joint 48 est en matériau souple, le joint 48 empêche les chocs mécaniques directs entre la tête 28 et le rebord de l'ouverture 10 et/ou l'épaulement.

De nombreux autres modes de réalisation sont possibles. Par exemple, en variante, la courbe directrice de la partie tronconique 38 n'est pas nécessairement un cercle. Il peut aussi s'agir d'un carré ou d'un polygone régulier à plus de cinq côtés ou à trois côtés.

En variante, la rondelle 78 est omise. Dans ce cas, le rebord de l'ouverture 10 peut venir directement en appui sur l'épaulement 36 lorsque le capot 8 est dans sa position montée. Cela permet d'améliorer l'échange de chaleur entre le disjoncteur 20 et le capot 8.

Dans un autre mode de réalisation, la face 82 et donc le bourrelet sont omis. Dans ce cas, le fond 58 et le renfoncement 60 sont aussi omis.

Dans une autre variante, le bord 74 affleure le bord 47B.

## Revendications

1. Panneau de disjoncteurs comportant :
- un capot avant (8) amovible comportant des ouvertures,
- plusieurs disjoncteurs (20), chaque disjoncteur comportant, d'un côté, un culot (24), et du côté opposé, une tête (28) reçue à l'intérieur d'une ouverture (10) respective du capot avant, cette tête comprenant :
• une partie tronconique (38) qui s'évase, en allant vers le culot, depuis un sommet (42) jusqu'à sa base (44), et
• un épaulement (36), perpendiculaire à une direction d'embrochage, situé au niveau de la base de la partie tronconique,
- la partie tronconique (38) comportant immédiatement successivement en allant de sa base jusqu'à son sommet :
• un joint tronconique (48) en matériau élastomère, ce joint tronconique présentant une première face tronconique (70), directement exposée à l'extérieur, s'étendant depuis un bord inférieur (76) jusqu'à un bord supérieur (74), et
• un tronc de cône (46) en matériau plus dur que le matériau du joint tronconique, ce tronc de cône présentant une seconde face tronconique (50), directement exposée à l'extérieur, s'étendant depuis un bord inférieur (47B) jusqu'à un bord supérieur (47A) contenu dans le sommet de la partie tronconique,
**caractérisé en ce que** :
- la distance, dans la direction d'embrochage, entre le bord supérieur (74) de la première face tronconique (70) et l'épaulement (36) est au moins deux fois plus petite que la distance, dans la direction d'embrochage, entre les bords supérieur (47A) et inférieur (47B) de la seconde face tronconique (50), et
- le bord supérieur (74) de la première face tronconique (70) est en retrait, vers l'intérieur du disjoncteur, par rapport au bord inférieur (47B) de la seconde face tronconique.

2. Panneau selon la revendication 1, dans lequel :
- le panneau comporte une plaque arrière (4) de connexion équipée de plusieurs prises (6),
- chaque disjoncteur (20) est déplaçable, de façon réversible et le long de la direction d'embrochage, entre une position embrochée dans laquelle son culot (24) est embroché dans une prise respective de la plaque arrière, et une position débrochée dans laquelle son culot est électriquement isolé des prises de la plaque arrière, et
- le capot avant (8) est déplaçable entre :
• une position montée dans laquelle chaque ouverture est traversée par la tête d'un disjoncteur respectif et le pourtour de l'ouverture vient en appui sur l'épaulement de cette tête pour maintenir le disjoncteur dans sa position embrochée, et
• une position démontée dans laquelle chaque disjoncteur peut être librement déplacé vers sa position débrochée.

3. Panneau selon la revendication 2, dans lequel le joint tronconique (48) comporte une rondelle (78) coincée entre le capot avant et l'épaulement lorsque le panneau avant est dans sa position montée.

4. Panneau selon la revendication 2, dans lequel la distance entre les bords inférieur (76) et supérieur (74) de la première face tronconique est supérieure ou égale à l'écart entre max(H_{Ei}) - min(H_{Ei}), où :
- H_{Ei} est la distance, dans la direction d'embrochage, entre la plaque arrière de connexion et l'épaulement du disjoncteur dans sa position embrochée, et l'indice « i » est l'identifiant de ce disjoncteur,
- max(...) est la fonction qui retourne la plus grande distance H_{Ei} parmi l'ensemble des distances H_{Ei} de tous les disjoncteurs en position embrochée dans le panneau arrière de connexion, et
- min(...) est la fonction qui retourne la plus petite distance H_{Ei} parmi l'ensemble des distances H_{Ei} de tous les disjoncteurs en position embrochée dans le panneau arrière de connexion.

5. Panneau selon l'une quelconque des revendications précédentes, dans lequel la distance, dans la direction d'embrochage, entre les bords inférieur (76) et supérieur (74) de la première face tronconique est supérieure ou égale à l'épaisseur du capot avant.

6. Disjoncteur pour un panneau conforme à l'une quelconque des revendications précédentes, ce disjoncteur comportant, d'un côté, un culot (24), et du côté opposé, une tête (28) apte à être reçue à l'intérieur d'une ouverture (10) respective d'un capot avant du panneau de disjoncteurs, cette tête comprenant :
- une partie tronconique (38) qui s'évase, en allant vers le culot, depuis un sommet (42) jusqu'à sa base (44), et
- un épaulement (36), perpendiculaire à une direction d'embrochage, situé au niveau de la base de la partie tronconique,
- la partie tronconique comportant immédiatement successivement en allant de sa base jusqu'à son sommet :
• un joint tronconique (48) en matériau élastomère, ce joint tronconique présentant une première face tronconique (70), directement exposée à l'extérieur, s'étendant depuis un bord inférieur (76) jusqu'à un bord supérieur (74), et
• un tronc de cône (46) en matériau plus dur que le matériau du joint tronconique, ce tronc de cône présentant une seconde face tronconique (50), directement exposée à l'extérieur, s'étendant depuis un bord inférieur (47B) jusqu'à un bord supérieur (47A) contenu dans le sommet de la partie tronconique,
**caractérisé en ce que** :
- la distance, dans la direction d'embrochage, entre le bord supérieur (74) de la première face tronconique et l'épaulement (36) est au moins deux fois plus petite que la distance, dans la direction d'embrochage, entre les bords supérieur (47A) et inférieur (47B) de la seconde face tronconique (50), et
- le bord supérieur (74) de la première face tronconique (70) est en retrait, vers l'intérieur du disjoncteur, par rapport au bord inférieur (47B) de la seconde face tronconique.

7. Disjoncteur selon la revendication 6, dans lequel la distance, dans la direction d'embrochage, entre les bords inférieur (76) et supérieur (74) de la première face tronconique est inférieure ou égale à 3 mm.

8. Disjoncteur selon l'une quelconque des revendications 6 à 7, dans lequel cette tête comprend un bouton (40) d'actionnement du disjoncteur situé au sommet de la partie tronconique.

9. Disjoncteur selon la revendication 6, dans lequel le disjoncteur comporte un renfoncement (60) creusé au niveau de la base de la partie tronconique et le joint comporte une face interne, tournée vers l'intérieur du disjoncteur, cette face interne comportant un bourrelet (82) en saillie à l'intérieur du renfoncement pour retenir le joint sur le disjoncteur.

10. Joint tronconique en matériau élastomère pour un disjoncteur conforme à la revendication 9, ce joint tronconique présentant une première face tronconique (70), directement exposée à l'extérieur, s'étendant depuis un bord inférieur (76) jusqu'à un bord supérieur (74), **caractérisé en ce que** :
- la distance, dans une direction d'embrochage parallèle à un axe de symétrie de rotation de la première face tronconique, entre les bords inférieur (76) et supérieur (74) est inférieure ou égale à 3 mm, et
- le joint comporte une face interne, tournée du côté opposé à la première face tronconique, cette face interne comportant un bourrelet (82) en saillie.

## Patentansprüche

1. Leistungsschalterfeld, umfassend:
- eine demontierbare vordere Abdeckhaube (8), die Öffnungen aufweist,
- mehrere Leistungsschalter (20), wobei jeder Leistungsschalter auf einer Seite einen Sockel (24) und auf der gegenüberliegenden Seite einen Kopf (28), der im Inneren einer jeweiligen Öffnung (10) der vorderen Abdeckhaube aufgenommen ist, aufweist, wobei dieser Kopf umfasst:
• einen kegelstumpfförmigen Teil (38), welcher sich zum Sockel hin von einer Oberseite (42) bis zu seiner Grundfläche (44) erweitert, und
• einen Absatz (36), der zu einer Einsteckrichtung senkrecht ist und sich auf der Höhe der Grundfläche des kegelstumpfförmigen Teils befindet,
- wobei der kegelstumpfförmige Teil (38) von seiner Grundfläche zu seiner Oberseite hin unmittelbar nacheinander aufweist:
• eine kegelstumpfförmige Dichtung (48) aus Elastomermaterial, wobei diese kegelstumpfförmige Dichtung eine erste kegelstumpfförmige Fläche (70) aufweist, die direkt nach außen gewandt ist und sich von einem unteren Rand (76) bis zu einem oberen Rand (74) erstreckt, und
• einen Kegelstumpf (46) aus Material, das härter als das Material der kegelstumpfförmigen Dichtung ist, wobei dieser Kegelstumpf eine zweite kegelstumpfförmige Fläche (50) aufweist, die direkt nach außen gewandt ist und sich von einem unteren Rand (47B) bis zu einem oberen Rand (47A), der in der Oberseite des kegelstumpfförmigen Teils enthalten ist, erstreckt,
**dadurch gekennzeichnet, dass**:
- der Abstand, in der Einsteckrichtung, zwischen dem oberen Rand (74) der ersten kegelstumpfförmigen Fläche (70) und dem Absatz (36) wenigstens zweimal kleiner als der Abstand, in der Einsteckrichtung, zwischen dem oberen (47A) und dem unteren Rand (47B) der zweiten kegelstumpfförmigen Fläche (50) ist, und
- der obere Rand (74) der ersten kegelstumpfförmigen Fläche (70) bezüglich des unteren Randes (47B) der zweiten kegelstumpfförmigen Fläche zum Inneren des Leistungsschalters hin zurückspringend ist.

2. Feld nach Anspruch 1, wobei:
- das Feld eine hintere Anschlussplatte (4) aufweist, die mit mehreren Anschlüssen (6) ausgestattet ist,
- jeder Leistungsschalter (20) auf reversible Weise und entlang der Einsteckrichtung zwischen einer eingesteckten Position, in welcher ihr Sockel (24) in einen jeweiligen Anschluss der hinteren Platte eingesteckt ist, und einer herausgezogenen Position, in welcher ihr Sockel von den Anschlüssen der hinteren Platte elektrisch isoliert ist, verlagerbar ist, und
- die vordere Abdeckhaube (8) verlagerbar ist zwischen:
• einer montierten Position, in welcher jede Öffnung vom Kopf eines jeweiligen Leistungsschalters durchquert wird und der Umfangsrand der Öffnung am Absatz dieses Kopfes zur Anlage kommt, um den Leistungsschalter in seiner eingesteckten Position zu halten, und
• einer demontierten Position, in welcher jeder Leistungsschalter frei in Richtung seiner herausgezogenen Position verlagert werden kann.

3. Feld nach Anspruch 2, wobei die kegelstumpfförmige Dichtung (48) eine Scheibe (78) aufweist, die zwischen der vorderen Abdeckhaube und dem Absatz festgeklemmt ist, wenn sich die vordere Platte in ihrer montierten Position befindet.

4. Feld nach Anspruch 2, wobei der Abstand zwischen dem unteren (76) und dem oberen Rand (74) der ersten kegelstumpfförmigen Fläche größer als die oder gleich der Abweichung zwischen max(H_{Ei}) und min(H_{Ei}) ist, wobei:
- H_{Ei} der Abstand, in der Einsteckrichtung, zwischen der hinteren Anschlussplatte und dem Absatz des Leistungsschalters in dessen eingesteckter Position ist und der Index "i" die Kennung dieses Leistungsschalters ist,
- max(...) die Funktion ist, welche den größten Abstand H_{Ei} unter sämtlichen Abständen H_{Ei} aller Leistungsschalter in der eingesteckten Position in der hinteren Anschlussplatte liefert, und
- min(...) die Funktion ist, welche den kleinsten Abstand H_{Ei} unter sämtlichen Abständen H_{Ei} aller Leistungsschalter in der eingesteckten Position in der hinteren Anschlussplatte liefert.

5. Feld nach einem der vorhergehenden Ansprüche, wobei der Abstand, in der Einsteckrichtung, zwischen dem unteren (76) und dem oberen Rand (74) der ersten kegelstumpfförmigen Fläche größer als die oder gleich der Dicke der vorderen Abdeckhaube ist.

6. Leistungsschalter für ein Feld gemäß einem der vorhergehenden Ansprüche, wobei dieser Leistungsschalter auf einer Seite einen Sockel (24) und auf der gegenüberliegenden Seite einen Kopf (28), der geeignet ist, im Inneren einer jeweiligen Öffnung (10) einer vorderen Abdeckhaube des Leistungsschalterfeldes aufgenommen zu werden, aufweist, wobei dieser Kopf umfasst:
- einen kegelstumpfförmigen Teil (38), welcher sich zum Sockel hin von einer Oberseite (42) bis zu seiner Grundfläche (44) erweitert, und
- einen Absatz (36), der zu einer Einsteckrichtung senkrecht ist und sich auf der Höhe der Grundfläche des kegelstumpfförmigen Teils befindet,
- wobei der kegelstumpfförmige Teil von seiner Grundfläche zu seiner Oberseite hin unmittelbar nacheinander aufweist:
• eine kegelstumpfförmige Dichtung (48) aus Elastomermaterial, wobei diese kegelstumpfförmige Dichtung eine erste kegelstumpfförmige Fläche (70) aufweist, die direkt nach außen gewandt ist und sich von einem unteren Rand (76) bis zu einem oberen Rand (74) erstreckt, und
• einen Kegelstumpf (46) aus Material, das härter als das Material der kegelstumpfförmigen Dichtung ist, wobei dieser Kegelstumpf eine zweite kegelstumpfförmige Fläche (50) aufweist, die direkt nach außen gewandt ist und sich von einem unteren Rand (47B) bis zu einem oberen Rand (47A), der in der Oberseite des kegelstumpfförmigen Teils enthalten ist, erstreckt,
**dadurch gekennzeichnet, dass**:
- der Abstand, in der Einsteckrichtung, zwischen dem oberen Rand (74) der ersten kegelstumpfförmigen Fläche und dem Absatz (36) wenigstens zweimal kleiner als der Abstand, in der Einsteckrichtung, zwischen dem oberen (47A) und dem unteren Rand (47B) der zweiten kegelstumpfförmigen Fläche (50) ist, und
- der obere Rand (74) der ersten kegelstumpfförmigen Fläche (70) bezüglich des unteren Randes (47B) der zweiten kegelstumpfförmigen Fläche zum Inneren des Leistungsschalters hin zurückspringend ist.

7. Leistungsschalter nach Anspruch 6, wobei der Abstand, in der Einsteckrichtung, zwischen dem unteren (76) und dem oberen Rand (74) der ersten kegelstumpfförmigen Fläche kleiner als oder gleich 3 mm ist.

8. Leistungsschalter nach einem der Ansprüche 6 bis 7, wobei dieser Kopf einen Knopf (40) zur Betätigung des Leistungsschalters umfasst, der sich auf der Oberseite des kegelstumpfförmigen Teils befindet.

9. Leistungsschalter nach Anspruch 6, wobei der Leistungsschalter eine Vertiefung (60) aufweist, die auf der Höhe der Grundfläche des kegelstumpfförmigen Teils ausgebildet ist, und die Dichtung eine dem Inneren des Leistungsschalters zugewandte Innenfläche aufweist, wobei diese Innenfläche eine ins Innere der Vertiefung vorspringende Wulst (82) aufweist, um die Dichtung auf dem Leistungsschalter zu halten.

10. Kegelstumpfförmige Dichtung aus Elastomermaterial für einen Leistungsschalter gemäß Anspruch 9, wobei diese kegelstumpfförmige Dichtung eine erste kegelstumpfförmige Fläche (70) aufweist, die direkt nach außen gewandt ist und sich von einem unteren Rand (76) bis zu einem oberen Rand (74) erstreckt, **dadurch gekennzeichnet, dass**:
- der Abstand, in einer zu einer Rotationssymmetrieachse der ersten kegelstumpfförmigen Fläche parallelen Einsteckrichtung, zwischen dem unteren (76) und dem oberen Rand (74) kleiner als oder gleich 3 mm ist, und
- die Dichtung eine Innenfläche aufweist, die der zur ersten kegelstumpfförmigen Fläche entgegengesetzten Seite zugewandt ist, wobei diese Innenfläche eine vorspringende Wulst (82) aufweist.

## Claims

1. Breaker panel comprising:
- a removable front cover (8) comprising apertures; and
- a plurality of circuit breakers (20), each circuit breaker comprising, at one end, a foot (24), and at the opposite end, a head (28) received into the interior of a respective aperture (10) of the front cover, this head comprising:
• a frustoconical portion (38) that flares in the direction of the foot, from a top (42) to its base (44); and
• a shoulder (36), perpendicular to a plug-in direction, located level with the base of the frustoconical portion,
- the frustoconical portion (38) comprising in immediate succession when traced from its base to its top:
• a frustroconical seal (48) made of an elastomer, this frustroconical seal having a first frustroconical face (70), exposed directly to the exterior and extending from a lower edge (76) to an upper edge (74); and
• a conic frustum (46) made of a material that is harder than the material of the frustroconical seal, this conic frustum having a second frustroconical face (50), directly exposed to the exterior and extending from a lower edge (47B) to an upper edge (47A) contained in the top of the frustroconical portion;
**characterized in that**:
- the distance, in the plug-in direction, between the upper edge (74) of the first frustroconical face (70) and the shoulder (36) is at least two times smaller than the distance, in the plug-in direction, between the upper and lower edges (47A, 47B) of the second frustroconical face (50); and
- the upper edge (74) of the first frustroconical face (70) is set back, towards the interior of the circuit breaker, relative to the lower edge (47B) of the second frustroconical face.

2. Panel according to Claim 1, in which:
- the panel comprises a connecting back board (4) equipped with a plurality of sockets (6);
- each circuit breaker (20) is movable, reversibly and along the plug-in direction, between a plugged-in position in which its foot (24) is plugged into a respective socket of the back board, and an unplugged position in which its foot is electrically isolated from the sockets of the back board; and
- the front cover (8) is movable between:
• a mounted position in which each aperture is passed through by the head of a respective circuit breaker and the perimeter of the aperture bears against the shoulder of this head in order to maintain the circuit breaker in its plugged-in position; and
• a demounted position in which each circuit breaker may be freely moved towards its unplugged position.

3. Panel according to Claim 2, in which the frustroconical seal (48) comprises a washer (78) wedged between the front cover and the shoulder when the front panel is in its mounted position.

4. Panel according to Claim 2, in which the distance between the lower and upper edges (76, 74) of the first frustroconical face is larger than or equal to the disparity between max(H_{Ei})- min(H_{Ei}), where:
- H_{Ei} is the distance, in the plug-in direction, between the connecting back board and the shoulder of the circuit breaker in its plugged-in position, and the index "i" is the identifier of this circuit breaker;
- max(...) is the function that returns the largest distance H_{Ei} from the set of distances H_{Ei} of all the circuit breakers in their plugged-in position in the connecting back panel; and
- min(...) is the function that returns the smallest distance H_{Ei} from the set of distances H_{Ei} of all the circuit breakers in their plugged-in position in the connecting back panel.

5. Panel according to any one of the preceding claims, in which the distance, in the plug-in direction, between the lower and upper edges (76, 74) of the first frustroconical face is larger than or equal to the thickness of the front cover.

6. Circuit breaker for a panel according to any one of the preceding claims, this circuit breaker comprising, at one end, a foot (24), and at the opposite end, a head (28) able to be received into the interior of a respective aperture (10) of a front cover of the breaker panel, this head comprising:
- a frustoconical portion (38) that flares in the direction of the foot, from a top (42) to its base (44); and
- a shoulder (36), perpendicular to a plug-in direction, located level with the base of the frustoconical portion,
- the frustoconical portion comprising in immediate succession when traced from its base to its top:
• a frustroconical seal (48) made of an elastomer, this frustroconical seal having a first frustroconical face (70), exposed directly to the exterior and extending from a lower edge (76) to an upper edge (74); and
• a conic frustum (46) made of a material that is harder than the material of the frustroconical seal, this conic frustum having a second frustroconical face (50), directly exposed to the exterior, extending from a lower edge (47B) to an upper edge (47A) contained in the top of the frustroconical portion;
**characterized in that**:
- the distance, in the plug-in direction, between the upper edge (74) of the first frustroconical face and the shoulder (36) is at least two times smaller than the distance, in the plug-in direction, between the upper and lower edges (47A, 47B) of the second frustroconical face (50); and
- the upper edge (74) of the first frustroconical face (70) is set back, towards the interior of the circuit breaker, relative to the lower edge (47B) of the second frustroconical face.

7. Circuit breaker according to Claim 6, in which the distance, in the plug-in direction, between the lower and upper edges (76, 74) of the first frustroconical face is smaller than or equal to 3 mm.

8. Circuit breaker according to either of Claims 6 and 7, in which this head comprises a button (40) for actuating the circuit breaker, located on top of the frustroconical portion.

9. Circuit breaker according to Claim 6, in which the circuit breaker comprises an indent (60) recessed into the base of the frustroconical portion and the seal comprises an internal face, turned towards the interior of the circuit breaker, this internal face comprising a bead (82) protruding towards the interior of the indent in order to retain the seal on the circuit breaker.

10. Frustroconical seal made of elastomer for a circuit breaker according to Claim 9, this frustroconical seal having a first frustroconical face (70), directly exposed to the exterior and extending from a lower edge (76) to an upper edge (74), **characterized in that**:
- the distance, in a plug-in direction parallel to an axis of rotational symmetry of the first frustroconical face, between the lower and upper edges (76, 74) is smaller than or equal to 3 mm; and
- the seal comprises an internal face, on the side opposite the first frustroconical face, this internal face comprising a protruding bead (82).
